Europäisches Patentamt

European Patent Office

Office européen des brevets

(19)

(11) **EP 0 572 581 B1**

(12) **EUROPEAN PATENT SPECIFICATION**

(45) Date of publication and mention
of the grant of the patent:
**29.01.1997 Bulletin 1997/05**

(21) Application number: **92922357.6**

(22) Date of filing: **12.11.1992**

(51) Int Cl.6: **G01N 29/02**, G01F 1/66,
G01P 5/22

(86) International application number:
**PCT/FI92/00308**

(87) International publication number:
**WO 93/13414 (08.07.1993 Gazette 1993/16)**

(54) **METHOD AND DEVICE FOR MONITORING OF A GAS FLOW, IN PARTICULAR A NATURAL-GAS FLOW**

VERFAHREN UND VORRICHTUNG ZUR ÜBERWACHUNG EINER GASSTRÖMUNG,
INSBESONDERE EINER ERDGASSTRÖMUNG

PROCEDE ET DISPOSITIF DE CONTROLE D'UN ECOULEMENT DE GAZ, PLUS
SPECIFIQUEMENT D'UN ECOULEMENT DE GAZ NATUREL

(84) Designated Contracting States:
**AT BE CH DE DK ES FR GB GR IT LI LU MC NL SE**

(30) Priority: **23.12.1991 FI 916103**

(43) Date of publication of application:
**08.12.1993 Bulletin 1993/49**

(73) Proprietor: **INSTRUMENTTITEHDAS KYTÖLÄ OY**
**SF 40951 Muurame (FI)**

(72) Inventors:
• **MÄYRÄNEN, Tarmo**
**SF-40950 Muurame (FI)**
• **KOUKKARI, Sauli**
**SF-40950 Muurame (FI)**
• **HIISMÄKI, Pekka**
**SF-02320 Espoo (FI)**

• **KNUUTTILA, Matti**
**SF-02940 Espoo (FI)**
• **KALL, Leif**
**SF-02770 Espoo (FI)**
• **TIITTA, Antero**
**SF-02360 Espoo (FI)**

(74) Representative: **Onn, Thorsten et al**
**AB STOCKHOLMS PATENTBYRA**
**Box 23101**
**104 35 Stockholm (SE)**

(56) References cited:
**CH-A- 669 463**            **FI-B- 76 885**
**GB-A- 2 210 977**        **US-A- 2 826 912**
**US-A- 3 568 661**        **US-A- 4 596 133**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention concerns a method for monitoring of the composition of a flowing gas, in which method acoustic oscillations are applied to the gas flow pipe downstream and upstream, and the travel times of the monitoring sound downstream and upstream are detected, and the sound speed or a quantity representing same is determined on the basis of said travel times, which speed or quantity is mainly dependent on the average molecular weight of the gas to be monitored.

Further, the invention concerns a device for monitoring of the composition of a flowing gas, in particular of natural gas.

From the FI Patent No. 76,885 of the Technical Research Centre of Finland (Valtion tutkimuskeskus VTT), a method and a device of acoustic flow measurement are known for measurement of the flow velocities, volumetric flows, and/or mass flows of gases, liquids, and/or multi-phase suspensions in a pipe or in an equivalent wave tube by making use of acoustic waves passing downstream and upstream. In this prior-art method and device, the wide-band acoustic signal coming from the sound sources is made to pass in the measurement pipe or equivalent wave tube in the plane-wave mode both downstream and upstream, and the flow velocity is determined on the basis of the sound travel times obtained from the maxima and/or the minima of the correlation functions of the measured sound signals and on the basis of the mutual distance between the measurement points.

In one technical solution described in said FI patent, the sound is fed into the measurement pipe in the form of frequency scanning, and the travel time of sound is determined from the signals of the microphones placed at the ends of the measurement distance by means of a polarity correlator. From the travel times measured downstream and upstream, it is possible to measure both the average flow velocity and the sound speed in a medium at rest with high accuracy. Moreover, if necessary, from the flow velocity and from the cross-sectional area of the pipe, it is possible to calculate the volumetric flow rate. The gas flow velocity measured in accordance with said FI patent or in some other way is, as a rule, used as starting information, together with the temperature and the pressure of the gas, for calculation of the mass flow. Thus, as a rule, measurement of flow velocity is combined with measurement of gas temperature and pressure.

Besides measurement of the flow velocity and of the mass flow, there is also a need for gas monitoring of other sorts, in particular for monitoring of the composition of the gas. Need for monitoring has occurred, e.g., in the case of natural gas, which is economically the most important source of energy in gas form. For example, natural gas may contain varying quantities of hydrogen, water vapour, or inert gases. As is known in prior art, the quality of natural gas is monitored by taking a sample from it and by examining the sample chromatographically, which requires expensive equipment, is laborious, and difficult to carry out automatically. Thus, there is a considerable need to provide such a method and device for monitoring of a gas, in particular of natural gas, as can give the alarm in the case of a significant change in the quality of the gas, in which case, if necessary, it would be possible to perform a closer analysis of the composition of the gas by means of chromatography. It is also necessary to monitor the composition of the gas to determine its combustion value for purposes of invoicing.

It is known that the speed of sound in a gas depends mainly on the composition and temperature of the gas. The composition affects the speed of sound mainly by the intermediate of the average molecular weight, and to some extent also by the intermediate of the number of degrees of freedom in the molecules, i.e. of the number of atoms present in a molecule.

The object of the present invention is to provide a method and device for monitoring of the flow of a gas, in particular of natural gas, and in particular for monitoring of the composition of the gas.

An object of the invention is to provide a method in which, besides on the flow velocity of the gas, information is also obtained on whether the composition of the gas remains homogeneous or whether variations occur in it, for example foreign gases, such as hydrogen, water vapour or atmospheric gases in natural gas.

It is a particular object of the invention to provide a method that can be favourably connected to measurement of the flow velocity of a gas, in particular to an acoustic gas flow meter described in said FI Patent No. 76,885, wherein the sound travel times downstream and upstream are measured by means of the correlation technique, preferably by means of a polarity correlator.

With respect to the prior art closely related to the present invention, reference is further made to the CH Patent No. 669,463 and to the US Patent No. 4,596,133, in which devices suitable for monitoring of a flowing gas are described, which devices are accomplished mainly by means of an ultrasonic technique and in which devices, however, it is an essential difference as compared with the present invention of ours that, in the cited patents, the acoustic energy has been arranged to pass across the flow pipe diagonally along a certain path, in which case the wave length of the sound must be substantially shorter than the diameter of the measurement pipe. It is a further difference in said cited patents, as compared with the devices of our invention, that, as is common in ultrasonic technology, the same detectors operate both as the transmitters and as the receivers of the monitoring sound.

In view of achieving the objectives stated above and those that will come out later, the method of the invention is mainly characterized in that, in the method, the frequency of said acoustic oscillations is chosen below a certain limit frequency, so that the monitoring sound moves in the axial direction of the measurement pipe in the plane-wave mode, that the travel times of the monitoring sounds are detected over a measurement distance in the axial direction of the measurement pipe, which measurement distance is dimensioned substantially larger than the average diameter of the measurement pipe, and that, when said sound speed or the quantity representing same differs from its range of expected values, an alarm signal or some other control signal is given.

On the other hand, the device in accordance with the invention is mainly characterized in that the device comprises a measurement pipe, in which the gas flow to be measured runs, and loudspeakers as the transmitters of the sound signals of audio frequency and for creating a plane-wave mode in the measuring pipe and microphones as the sound detectors, which microphones are placed in connection with the measurement pipe between said loudspeakers at a certain known distance, in the axial direction of the measurement pipe, from one another, which axial distance is substantially, preferably by one order of magnitude larger than the average diameter of the measurement pipe, that the device comprises a frequency-scanned signal generator connected to the loud-speakers, that the device comprises units by whose means both the gas flow velocity and the speed of sound in the gas flow are determined, and that the device further comprises an alarm unit, which is fitted to produce an alarm when the detected sound speed or the quantity representing same is above or below certain preset limit values.

In the most advantageous embodiment of the invention, by means of the same devices, both the gas flow velocity and the speed of sound in the gas are measured acoustically. Moreover, it is also advantageous to measure the gas temperature and, in some cases, also the pressure. On the basis of the measurement of the temperature, the detected sound speed can be reduced to the preset reference temperature. On the basis of the monitoring of this reduced sound speed, alarm or any other control signal is given. In this way, the composition of the gas can be monitored, said composition affecting the sound speed mainly by the intermediate of the average molecular weight and, to some extent, also by the intermediate of the number of the degrees of freedom in the molecules. The permitted range of variation in the sound speed can be determined empirically and, if necessary, by means of reference measurements carried out chromatographically. The average value of the range of variation in sound speed permitted without alarm may illustrate, for example, an average or ideal quality of gas.

In this connection, it should be ascertained that, above and in the following, gas is understood as also meaning a gas mixture consisting of different gases.

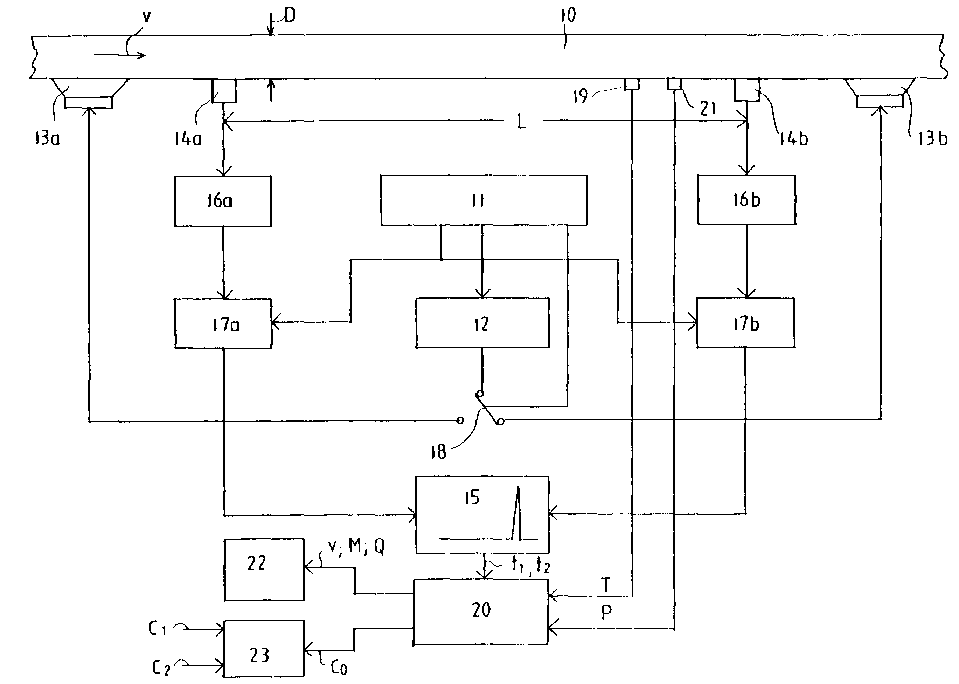

In the following, the invention will be described in detail with reference to an exemplifying embodiment of the invention illustrated in the figure in the accompanying drawing, the invention being in no way strictly confined to the details of said embodiment.

The figure is a schematic illustration of a gas-flow monitoring device in accordance with the invention mainly as a block diagram.

According to the figure, a gas flow that runs in the measurement pipe 10 is monitored acoustically. Typically, the gas to be monitored is natural gas. Into the measurement pipe 10, sound signals are transmitted by means of loudspeakers 13a and 13b downstream and upstream, which signals are received by means of microphones 14a and 14b placed between the loudspeakers 13a and 13b, the mutual distance L between the microphones being essential for the monitoring. The diameter D of the measurement pipe 10 and the measurement distance L are chosen, e.g., so that $L \approx 10D$.

From the point of view of the measurement technology related to the invention, it is the most essential physical observation that in a pipe 10 with rigid walls, below a certain limit frequency which depends on the dimensions of the pipe 10, exclusively a so-called plane-wave mode or piston mode can proceed, whose speed of progress does not depend on local variations in the medium, in its temperature or flow velocity, but exclusively on the average values prevailing within the measurement distance (B. Robertson, "Effect of Arbitrary Temperature and Flow Profiles on the Speed of Sound in a Pipe", J. Acoust. Soc. Am., Vol 62, No. 4, p. 813...818, October 1977, and B. Robertson, "Flow and Temperature Profile Independence of Flow Measurements Using Long Acoustic Waves", Transactions of the ASME, Vol. 106, p. 18...20, March 1984), which permits accurate flow measurement independent from the profile. For a pipe of circular section, said limit frequency $f_c$ can be calculated from the formula

$$f_c = c/(1.7 \cdot D), \tag{1}$$

wherein c is the travel speed of sound in the medium that fills the pipe, and D is the diameter of the pipe 10.

In the following, the most important formulae of calculation used in the flow monitoring in accordance with the invention will be given.

$$\text{Sound speed [m/s]} \quad c = 0.5 \cdot L \cdot (t_1^{-1} + t_2^{-1}) \tag{2}$$

$$\text{Temperature-reduced sound speed [m/s]} \; c_0 = c \cdot \sqrt{(T_0/T)} \tag{3}$$

$$\text{Flow velocity [m/s]} \quad v = 0.5 \cdot L \cdot (t_1^{-1} - t_2^{-1}) \tag{4}$$

$$\text{Volumetric flow [cu.m/s]} \; Q = v \cdot A \tag{5}$$

$$\text{Mass flow [kg/s]} \; M = Q \cdot \rho \tag{6}$$

$V =$      average flow velocity
$L =$      distance between microphones 14a and 14b
$t_1 =$      travel time of sound downstream
$t_2 =$      travel time of sound upstream
$T_0 =$      reference temperature to which the sound speed $c_0$ has been reduced
$T =$      temperature of gas in the measurement pipe 10
$Q =$      volumetric flow
$A =$      cross-sectional area of the pipe 10
$M =$      mass flow
$\rho =$      density of gas

According to the figure, the loudspeakers 13a and 13b are fed alternatingly with electric signals received from the scanning generator 12. The alternation of the feed of the loudspeakers 13a and 13b is controlled by means of a switch 18 controlled by the control unit 11 of frequency scanning. The receiving side of the acoustic measurement system comprises the above microphones 14a and 14b, placed at the measurement distance L from one another, the output signal of said microphones being fed, by the intermediate of the amplifiers 16a and 16b, to the scannable filters 17a and 17b, which are essential components in the present invention and whose scanning band is controlled by the control unit 11 of frequency scanning. Said scannable filters 17a and 17b are connected to the polarity correlator 15.

According to the figure, a gas-temperature T measurement detector 19 and a gas-pressure p measurement detector 21 are placed in the measurement pipe 10. From the detectors 19 and 21, the measurement information is passed to the calculator unit 20, to which the data concerning the sound travel times $t_1$ downstream and the sound travel times $t_2$ upstream are also transferred from the polarity correlator 15. In the unit 20, on the basis of the above formula (2), the sound speed c in the gas to be monitored is calculated and, on the basis of the formula (4), the flow velocity v of the gas is calculated. From the unit 20, the flow velocity v is transferred to the calculation and/or display unit 22, in which the flow velocity v is displayed and, if necessary, recorded, e.g., by means of a plotter and, if necessary, based on the above formulae (5) and (6), the volumetric flow Q and/or the mass flow M is/are calculated, and they may also be displayed and/or recorded in the unit 22. In the present invention, the monitoring of the composition of the gas flowing in the pipe 10 is connected with the monitoring, described above, of the flow velocity v and of the quantities Q and M that can be derived from said flow velocity.

Since the sound speed in a gas is mainly dependent on the temperature and on the composition of the gas, which affects the sound speed mainly by the intermediate of the average molecular weight and to some extent also by the intermediate of the number of the degrees of freedom in the molecules, the sound speed in the gas also illustrates the composition of the gas and at least such considerable changes in the composition as are supposed to be monitored by means of the present invention.

In the unit 20, based on the above formula (2), the sound speed c is calculated by making use of the travel times $t_1$ and $t_2$. Further, when the information on the temperature T of the flowing gas is brought to the unit 20 from the detector 19, on the basis of the above formula (3), $c_0 = c \cdot \sqrt{(T_0/T)}$, it is possible to determine the sound speed $c_0$ that has been reduced to the reference temperature $T_0$ given to the system. From the unit 20, the reduced sound speed $c_0$ is passed to the unit 23. The unit 23 operates as a reference and alarm unit, which gives the alarm when the reduced sound speed $c_0$ is above or below the given limit values $c_1$ and $c_2$. Said limit values $c_1$ and $c_2$ can be arranged so that they can be set and fed to the unit 23. When the reduced sound speed $c_0$ remains within the given limits $c_1$ and $c_2$, the system considers that the composition of the gas is sufficiently homogeneous. When the reduced sound speed $c_0$

detected by the monitoring system is above said upper limit $c_1$ or below said lower limit $c_2$, the system gives a suitable alarm signal. Alternatively, said limits $C_1$ and $C_2$ can be arranged as dependent on temperature in a way corresponding to the reduction described above. An alarm activates more precise determination of the gas composition, e.g., chromatographically. If the temperature of the gas remains sufficiently invariable, its measurement is not always necessary, so that the temperature-reduction of sound speed described above is not necessary. As a rule, however, measurement of the temperature and reduction of the sound speed on its basis are necessary in the invention.

It should be emphasized that the above monitoring and mode of determination of the sound travel times $t_1$ and $t_2$ is just one exemplifying embodiment, to which the invention is not confined. In the invention, it is possible to apply the various details of acoustic flow measurement that are described in more detail in said FI Patent No. 76,885 and in the applicant's FI Patent Application No. 916102.

Regarding the block diagram in the accompanying figure, it is stated further that the units illustrated as individual blocks may, in practical apparatuses, be placed physically as divided in different ways. An operational division of the blocks different from the figure is also possible.

In the following, the patent claims will be given, and the various details of the invention may show variation within the scope of the inventive idea defined in said claims and differ from what has been stated above by way of example only.

## Claims

1. Method for monitoring of the composition of a flowing gas, in which method acoustic oscillations are applied to the gas flow pipe (10) downstream and upstream, and the travel times $(t_1, t_2)$ of the monitoring sound downstream and upstream are detected, and the sound speed (c) or a quantity representing same is determined on the basis of said travel times $(t_1, t_2)$, which speed (c) or quantity is mainly dependent on the average molecular weight of the gas to be monitored, **characterized** in that, in the method, the frequency of said acoustic oscillations is chosen below a certain limit frequency $(f_c)$, so that the monitoring sound moves in the axial direction of the measurement pipe in the plane-wave mode, that the travel times $(t_1, t_2)$ of the monitoring sounds are detected over a measurement distance (L) in the axial direction of the measurement pipe, which measurement distance is dimensioned substantially larger than the average diameter (D) of the measurement pipe, and that, when said sound speed (c) or the quantity representing same differs from its range of expected values $(c_1 ... c_2)$, an alarm signal or some other control signal is given.

2. Method as claimed in claim 1, **characterized** in that, in the method, the measurement pipe that is used is a gas flow pipe (10) of substantially circular section, and that the upper limit frequency $f_c$ of the monitoring sound is chosen so that $f_c = c/(1.7 \cdot D)$, wherein c is the sound travel speed in the medium that fills the gas flow pipe (10), and D is the diameter of said gas flow pipe (10).

3. Method as claimed in claim 1 or 2, **characterized** in that the distance of measurement (L) of the travel times $(t_1, t_2)$ of the monitoring sounds downstream and upstream, in the axial direction of the gas flow pipe (10), is chosen so that $L \approx 10D$.

4. Method as claimed in any of the claims 1 to 3, **characterized** in that, in the method, the temperature (T) of the flowing gas is measured, that, on the basis of said measurement of temperature, the sound speed that has been reduced to a certain reference temperature $T_0$ is determined from the formula $c_0 = c \cdot \sqrt{(T_0/T)}$ , which is applicable to an ideal gas and wherein T = absolute measured temperature of the gas, $T_0$ = chosen absolute reference temperature, c = measured sound speed, and $c_0$ = sound speed reduced to the reference temperature, or by using a corresponding more realistic formula, and that, when said reduced temperature $(c_0)$ differs from its expected range $(c_1 ... c_2)$, an alarm signal or control signal is given.

5. Method as claimed in any of the claims 1 to 4, **characterized** in that, in the method, based on said travel times $(t_1, t_2)$, the velocity (v) of the flowing gas is calculated by means of a known formula (4) of calculation and/or, based on the above flow-velocity measurement, the volumetric flow (Q) and/or the mass flow (M) is/are calculated on the basis of known formulae (5),(6) of calculation.

6. Method as claimed in any of the claims 1 to 5, **characterized** in that, in the method, the pressure (p) of the flowing gas is also measured.

7. Method as claimed in any of the claims 1 to 6, **characterized** in that, in the method, substantially by means of the same apparatuses, both the homogeneity of the composition of the gas is monitored and its flow velocity (v) and/or quantities (Q,M) that can be derived from same is/are measured, that in the method long-wave sound is transmitted into the measurement pipe (10) and the sound signals passing in the gas flow downstream and upstream are detected by means of two sound detectors (14a,14b) placed in connection with the measurement pipe (10) at a specified distance (L) from one another, both the flow velocity (v) of the gas that flows in the measurement pipe (10) and the sound speed (c) being determined by making use of polarity correlation $(15;15_1, 15_2)$ of said signals by means of known formulae (2) and (4) of calculation, and that the frequency of the sound that is transmitted into the measurement pipe (10) is scanned between a certain minimum and maximum frequency $(f_{min}...f_{max})$, that the measurement signals $(f_1(t), f_2(t))$ arriving from the two sound detectors (14a,14b) are passed to a narrow-band filter (17a,17b) or system of filters, that the passband of said filters (17) is scanned synchronously with the frequency scanning of the sound transmission, and that the duration of the frequency scanning and the width of the passband of said filters (17) have been chosen so that, at the moment of the measurement sequence, the measurement signal detected by each sound detector (14a,14b) has access through its filter (17) substantially without attenuation, as well as so that the interference frequencies substantially different from the mean frequency of the filters (17) are attenuated significantly.

8. Device for monitoring of the composition of a flowing gas, in particular of natural gas, **characterized** in that the device comprises a measurement pipe (10), in which the gas flow to be measured runs, and loudspeakers (13a, 13b) as transmitters of sound signals of audio frequency for creating a plane-wave mode in the measuring pipe (10) and microphones (14a,14b) as the sound detectors, which microphones are placed in connection with the measurement pipe (10) between said loudspeakers (13a,13b) at a certain known distance (L), in the axial direction of the measurement pipe, from one another, which axial distance is substantially, preferably by one order of magnitude, larger than the average diameter (D) of the measurement pipe (10), that the device comprises a frequency-scanned signal generator (12) connected to the loudspeakers (13a, 13b), that the device comprises units (20,22,23) by whose means both the gas flow velocity (v) and the speed of sound (c) in the gas flow are determined, and that the device further comprises an alarm unit (23), which is fitted to produce an alarm when the detected sound speed (c) or the quantity representing same is above or below certain preset limit values $(c_1,c_2)$.

9. Device as claimed in claim 8, **characterized** in that the device comprises a temperature detector (19) fitted in the measurement pipe (10), from which detector a temperature measurement signal (T) can be passed to the calculator unit (20) of the device, by means of which unit (20) the sound speed $(c_0)$ that has been reduced to a certain preset reference temperature $(T_0)$ can be determined by means of a known formula (3) of calculation, and that the device comprises a unit (23), which is fitted to give an alarm or control signal when said reduced sound speed $(c_0)$ differs from its range of expected values $(c_1...c_2)$.

10. Device as claimed in claim 8 or 9, **characterized** in that the device comprises a polarity correlator $(15;15_1,15_2)$, into which the signals received from said microphones (14a,14b) are fed, that the device comprises two frequency-scanned filters (17a,17b) or an equivalent system of filters, through which the signals coming from said microphones (14a,14b) are fed to said polarity correlator (15), and that the device comprises a control (11) of the frequency scanning, by whose means the frequency of the frequency-scanning signal generator (12) and the frequency scanning of said narrow-band filters (17) are controlled synchronously with one another.

11. Device as claimed in any of the claims 8 to 10, **characterized** in that a pressure detector (21) for the flowing gas is placed in the measurement pipe, which detector gives a pressure measurement signal to the calculator unit (20) of the device.

12. Device as claimed in any of the claims 8 to 11 for monitoring of natural gas, **characterized** in that the device is fitted to give a starting impulse for more precise chromatographic determination of the composition of natural gas.

**Patentansprüche**

1. Verfahren zur Überwachung der Zusammensetzung eines strömenden Gases, wobei bei dem Verfahren das Gasströmungsrohr (10) oberstromig und unterstromig mit Schallschwingungen beaufschlagt wird und die Ausbreitungszeiten $(t_1, t_2)$, des Überwachungsschalls unterstromig und oberstromig erfaßt werden, und die Schallgeschwindigkeit (c) oder eine diese wiedergebende Größe auf der Grundlage der Ausbreitungsgeschwindigkeiten $(t_1, t_2)$ bestimmt wird, wobei die Geschwindigkeit (c) oder die Größe im wesentlichen von dem mittleren Molekulargewicht des zu überwachenden Gases abhängig ist,
**dadurch gekennzeichnet, daß** bei dem Verfahren die Frequenz der Schallschwingungen unterhalb einer gewissen Grenzfrequenz ($f_c$) gewählt wird, so daß der Überwachungsschall in der Axialrichtung des Meßrohrs sich in der Mode einer ebenen Welle ausbreitet, daß die Ausbreitungszeiten ($t_1$, $t_2$) des Überwachungsschalls über einen Meßabstand (L) in der Axialrichtung des Meßrohrs erfaßt werden, wobei der Meßabstand wesentlich größer als der mittlere Durchmesser (D) des Meßrohrs dimensioniert ist, und daß, wenn die Schallgeschwindigkeit (c) oder die diese wiedergebende Größe von dem Bereich erwarteter Werte ($c_1 \ldots c_2$) abweicht, ein Warnsignal oder ein anderes Steuersignal abgegeben wird.

2. Verfahren nach Anspruch 1,
   **dadurch gekennzeichnet, daß** bei dem Verfahren das verwendete Meßrohr ein Gasströmungsrohr (10) mit im wesentlichen kreisförmigem Querschnitt ist, und daß die obere Grenzfrequenz $f_c$ des Überwachungsschalls derart gewählt ist, daß $f_c = c / (1,7 * D)$ gilt, wobei c die Schallausbreitungsgeschwindigkeit in dem das Gasströmungsrohr (10) füllenden Medium und D der Durchmesser des Gasströmungsrohrs (10) ist.

3. Verfahren nach Anspruch 1 oder 2,
   **dadurch gekennzeichnet, daß**
   der Abstand (L) zur unterstromigen und oberstromigen Messung der Ausbreitungszeiten ($t_1$, $t_2$) des Überwachungsschalls in der Axialrichtung des Gasströmungsrohrs (10) derart gewählt ist, daß $L \approx 10D$.

4. Verfahren nach einem der Ansprüche 1 bis 3
   **dadurch gekennzeichnet, daß** bei dem Verfahren die Temperatur (T) des strömenden Gases gemessen wird, daß auf der Grundlage der Messung der Temperatur die auf eine gewisse Bezugstemperatur $T_0$ reduzierte Schallgeschwindigkeit aus der auf ein ideales Gas anwendbaren Formel $c_0 = c - \sqrt{(T_0/T)}$ bestimmt wird, und wobei T = die absolut gemessene Temperatur des Gases, $T_0$ = die gewählte absolute Bezugstemperatur, c = die gemessene Schallgeschwindigkeit, und $c_0$ = die auf die Bezugstemperatur reduzierte Schallgeschwindigkeit ist, oder indem eine entsprechende realistischere Formel verwendet wird, und daß, wenn die reduzierte Temperatur ($c_0$) von ihrem erwarteten Bereich ($c_1 \ldots c_2$) abweicht, ein Warnsignal oder Steuersignal abgegeben wird.

5. Verfahren nach einem der Ansprüche 1 bis 4
   **dadurch gekennzeichnet, daß** bei dem Verfahren beruhend auf den Ausbreitungszeiten ($t_1$, $t_2$) die Geschwindigkeit (v) des strömenden Gases mittels einer bekannten Formel (4) zur Berechnung berechnet wird und/oder beruhend auf der obigen Strömungsgeschwindigkeitsmessung die Volumenströmung (Q) und/oder die Massenströmung (M) auf der Grundlage bekannter Berechnungsformeln (5), (6) berechnet wird/werden.

6. Verfahren nach einem der Ansprüche 1 bis 5,
   **dadurch gekennzeichnet, daß** bei dem Verfahren ebenfalls der Druck (p) des strömenden Gases gemessen wird.

7. Verfahren nach einem der Ansprüche 1 bis 6,
   **dadurch gekennzeichnet, daß** bei dem Verfahren
   im wesentlichen mittels der gleichen Vorrichtungen sowohl die Homogenität der Zusammensetzung des Gases überwacht wird als auch dessen Strömungsgeschwindigkeit (v) und/oder aus selbiger ableitbare Größen (Q, M) gemessen wird/werden, daß bei dem Verfahren langwelliger Schall in das Meßrohr (10) übertragen wird und die sich in der Gasströmung unterstromig und oberstromig ausbreitenden Schallsignale mittels zweier Schalldetektoren (14a, 14b) erfaßt werden, die in Verbindung mit dem Meßrohr (10) in einem spezifizierten Abstand (L) voneinander angeordnet sind, wobei sowohl die Strömungsgeschwindigkeit (v) des in dem Meßrohr (10) strömenden Gases als auch die Schallgeschwindigkeit (c) unter Verwendung einer Polaritätskorrelation (15; $15_1$, $15_2$) der Signale mittels bekannter Berechnungsformeln (2) und (4) bestimmt werden, und daß die Frequenz des in das Meßrohr (10) übertragenen Schalls zwischen einer gewissen Minimal- und Maximalfrequenz ($f_{min} \ldots f_{max}$) abgetastet wird, daß die von den zwei Schalldetektoren (14a, 14b) ankommenden Meßsignale ($f_1(t)$, $f_2(t)$) einem schmalbandigen Filter (17a, 17b) oder System von Filtern zugeführt werden, daß das Durchlaßband der Filter (17) synchron mit der Abtastfrequenz der Schallübertragung abgetastet wird, und daß die Dauer der Frequenzabtastung und die Breite des Durchlaßbandes der Filter (17) so gewählt wurden, daß zum Zeitpunkt der Meßsequenz das von jedem Schalldetektor (14a, 14b) erfaßte Meßsignal im wesentlichen ungedämpft durch das jeweilige Filter (17) gelangt, als auch daß die von der Mittenfrequenz der Filter (17) wesentlich unterschiedlichen Interferenzfrequenzen merklich gedämpft werden.

8. Vorrichtung zur Überwachung der Zusammensetzung eines strömenden Gases, insbesondere von Erdgas,
   **dadurch gekennzeichnet, daß**
   die Vorrichtung ein Meßrohr (10) umfaßt, in dem die zu messende Gasströmung verläuft, und Lautsprecher (13a, 13b) als Übertrager von Schallsignalen mit Audiofrequenz zur Erzeugung einer Mode einer ebenen Welle in dem Meßrohr (10) sowie Mikrophone (14a, 14b) als Schalldetektoren umfaßt, wobei die Mikrophone in Verbindung mit dem Meßrohr (10) zwischen den Lautsprechern (13a, 13b) in einem gewissen bekannten Abstand (L) voneinander in der Axialrichtung des Meßrohrs angeordnet sind, wobei der axiale Abstand wesentlich, vorzugsweise um eine Größenordnung größer als der mittlere Durchmesser (D) des Meßrohrs (10) ist, daß die Vorrichtung einen frequenzabgetasteten Signalgenerator (12) umfaßt, der an die Lautsprecher (13a, 13b) angeschlossen ist, daß die Vorrichtung Einheiten (20, 22, 23) umfaßt, mittels derer sowohl die Gasströmungsgeschwindigkeit (v) als auch die Schallgeschwindigkeit (c) in der Gasströmung bestimmt werden, und daß die Vorrichtung ferner eine Warneinheit (23) umfaßt, die ein Warnsignal erzeugt, wenn die erfaßte Schallgeschwindigkeit (c) oder die diese wiedergebende Größe oberhalb oder unterhalb gewisser voreingestellter Grenzwerte ($c_1$, $c_2$) ist.

9. Vorrichtung nach Anspruch 8,
   **dadurch gekennzeichnet, daß**
   die Vorrichtung einen in dem Meßrohr (10) vorgesehenen Temperaturdetektor (19) umfaßt, von dem ein Temperaturmeßsignal (T) zu der Recheneinheit (20) der Vorrichtung zugeführt werden kann, wobei mittels der Einheit (20) die auf eine gewisse voreingestellte Bezugstemperatur ($T_0$) reduzierte Schallgeschwindigkeit ($c_0$) mittels einer bekannten Berechnungsformel (3) bestimmt werden kann, und daß die Vorrichtung einer Einheit (23) umfaßt, die ein Warnsignal oder Steuersignal abgibt, wenn die reduzierte Schallgeschwindigkeit ($c_0$) von ihrem Bereich erwarteter Werte ($c_1 \ldots c_2$) abweicht.

10. Vorrichtung nach Anspruch 8 oder 9,
    **dadurch gekennzeichnet, daß**
    die Vorrichtung einen Polaritätskorrelator (15; $15_1$, $15_2$) umfaßt, dem die von den Mikrophonen (14a, 14b) empfangenen Signale zugeführt werden, daß die Vorrichtung zwei frequenzabgetastete Filter (17a, 17b) oder ein gleichwertiges System von Filtern umfaßt, durch die die von den Mikrophonen (14a, 14b) kommenden Signale dem Polaritätskorrelator (15) zugeführt werden, und daß die Vorrichtung eine Steuerung (11) der Frequenzabtastung umfaßt, mittels der die Frequenz des Frequenzabtastungs-Signalgenerators (12) und die Frequenzabtastung der schmalbandigen Filter (17) synchron zueinander gesteuert werden.

11. Vorrichtung nach einem der Ansprüche 8 bis 10,
    **dadurch gekennzeichnet, daß**
    ein Druckdetektor (21) für das strömende Gas in dem Meßrohr angeordnet ist, wobei der Detektor ein Druckmeßsignal an die Recheneinheit (20) der Vorrichtung abgibt.

12. Vorrichtung nach einem der Ansprüche 8 bis 11 zur Überwachung von Erdgas,
    **dadurch gekennzeichnet, daß**
    die Vorrichtung einen Startimpuls zur präziseren chromatographischen Bestimmung der Zusammensetzung von Erdgas abgibt.

## Revendications

1. Procédé pour le contrôle de la composition d'un écoulement de gaz, procédé dans lequel on applique des oscillations acoustiques à la conduite d'écoulement de gaz (10) en aval et en amont, et on détecte les temps de trajet ($t_1$, $t_2$) du son de contrôle en aval et en amont, et on détermine la vitesse du son (c) ou une quantité représentant celle-ci en fonction des temps de trajet ($t_1$, $t_2$), vitesse (c) ou grandeur qui est principalement fonction du poids moléculaire moyen du gaz à contrôler, caractérisé en ce que, dans le procédé, on choisit la fréquence des oscillations acoustiques au-dessous d'une certaine fréquence limite ($f_c$) de sorte que le son de contrôle se déplace dans la direction axiale de la conduite de mesure dans le mode à ondes planes, que les temps de trajet ($t_1$, $t_2$) des sons de contrôle sont détectés sur une distance de mesure (L) dans la direction axiale de la conduite de mesure, distance de mesure qui est dimensionnée de façon sensiblement supérieure au diamètre moyen (D) de la conduite de mesure et en ce que, lorsque la vitesse du son (c) ou la grandeur la représentant diffère de la plage des valeurs escomptées ($c_1 \ldots c_2$), il est émis un signal d'alarme ou autre signal de commande.

2. Procédé selon la revendication 1, caractérisé en ce que dans le procédé, la conduite de mesure utilisée est une conduite d'écoulement de gaz (10) de section sensiblement circulaire et en ce que la fréquence limite supérieure ($f_c$) du son de contrôle est choisie de telle sorte que $f_c = c/(1,7°D)$, où c est la vitesse de déplacement du son dans le milieu qui remplit la conduite d'écoulement de gaz (10) et D est le diamètre de la conduite d'écoulement de gaz (10).

3. Procédé selon la revendication 1 ou 2, caractérisé en ce que la distance de mesure (L) des temps de trajet ($t_1$, $t_2$) des sons de contrôle en aval et en amont, dans la direction axiale de la conduite d'écoulement de gaz (10) est choisie de telle sorte que $L \approx 10D$.

4. Procédé selon l'une quelconque des revendications 1 à 3, caractérisé en ce que, dans le procédé, la température (T) du gaz d'écoulement est mesurée, en ce que sur la base de cette mesure de température, on détermine la vitesse du son qui a été réduite à une certaine température de référence ($T_0$) à partir de la formule $c_o = c \cdot \sqrt{(T_o/T)}$, qui est applicable à un gaz idéal et dans laquelle T - température mesurée absolue du gaz, $T_o$ = température de référence absolue choisie, c = vitesse du son mesurée, et $c_o$ = vitesse du son réduite à la température de référence, ou en utilisant une formule correspondante plus réaliste, et en ce que lorsque cette température réduite ($c_o$) diffère de la plage escomptée ($c_1$....$c_2$), il est émis un signal d'alarme ou un signal de commande.

5. Procédé selon l'une quelconque des revendications 1 à 4, caractérisé en ce que dans le procédé, on calcule la vitesse (v) du gaz en écoulement en fonction des temps de trajet ($t_1$, $t_2$) au moyen d'une formule connue de calcul (4) et/ou en fonction de la mesure écoulement-vitesse ci-dessus, le flux volumétrique (Q) et/ou le flux massique (M) est/sont calculé(s) en fonction de formules de calcul connues (5), (6).

6. Procédé selon l'une quelconque des revendications 1 à 5, caractérisé en ce que, dans le procédé, on mesure également la pression (p) du gaz en écoulement.

7. Procédé selon l'une quelconque des revendications 1 à 6, caractérisé en ce que, dans le procédé, sensiblement au moyen des mêmes appareils, on contrôle l'homogénéité de la composition du gaz et on mesure sa vitesse d'écoulement (v) et/ou les grandeurs (Q, M) pouvant être dérivées de celle-ci, en ce que dans le procédé, le son à ondes longues est transmis dans la conduite de mesure (10) et les signaux sonores passant dans l'écoulement de gaz en aval et en amont sont détectés au moyen de deux détecteurs sonores (14a, 14b) placés en liaison avec la conduite de mesure (10) à une distance spécifiée (L) l'un de l'autre, la vitesse d'écoulement (v) du gaz traversant la conduite de mesure (10) et la vitesse du son (c) étant déterminées en utilisant la corrélation de polarité (15 ; $15_1$, $15_2$) de ces signaux au moyen de formules de calcul connues (2) et (4) et en ce que la fréquence du son qui est transmis dans la conduite de mesure (10) est balayée entre une certaine fréquence minimum et une certaine fréquence maximum ($f_{min}$....$f_{max}$), en ce que les signaux de mesure ($f_1(t)$, $f_2(t)$) provenant des deux détecteurs de son (14a, 14b) sont amenés sur un filtre à bande étroite (17a, 17b) ou à un système de filtres, en ce que la bande passante de ces filtres (17) est balayée de façon synchrone par le balayage de fréquence de la transmission sonore et en ce que la durée du balayage de fréquence et la largeur de la bande passante des filtres (17) est choisie de telle sorte qu'au moment de la séquence de mesure, le signal de mesure détecté par chaque détecteur sonore (14a, 14b) est accessible par son filtre (17), sensiblement sans atténuation, et par la même occasion, les fréquences d'interférence sensiblement différentes de la fréquence moyenne des filtres (17) sont fortement atténuées.

8. Dispositif pour contrôler la composition d'un gaz en écoulement, en particulier d'un gaz naturel, caractérisé en ce que le dispositif comprend une conduite de mesure (10), traversée par l'écoulement de gaz à mesurer, et des haut-parleurs (13a, 13b) en tant que transmetteurs des signaux sonores de fréquence audio pour créer un mode à ondes planes dans la conduite de mesure (10) et des microphones (14a, 14b) en tant que détecteurs sonores, microphones qui sont montés en liaison avec la conduite de mesure (10) entre les haut-parleurs (13a, 13b) à une certaine distance connue (L), dans la direction axiale de la conduite de mesure, l'un par rapport à l'autre, laquelle distance axiale est sensiblement, de préférence d'un ordre de grandeur supérieur au diamètre moyen (D) de la conduite de mesure (10), en ce que le dispositif comprend un générateur de signaux balayés en fréquence (12) raccordé aux haut-parleurs (13a, 13b), en ce que le dispositif comprend des unités (20, 22, 23) au moyen desquelles on détermine la vitesse d'écoulement du gaz (v) et la vitesse du son (c) dans l'écoulement de gaz et en ce que le dispositif comprend de plus une unité d'alarme (23) qui est apte à produire une alarme lorsque la vitesse de son détectée (c) ou la quantité représentant celle-ci se situe au-dessus ou au-dessous de certaines valeurs limites préétablies ($c_1$, $c_2$).

9. Dispositif selon la revendication 8, caractérisé en ce que le dispositif comprend un capteur de température (19) monté dans la conduite de mesure (10), capteur à partir duquel on peut amener un signal de mesure de température (T) vers l'unité de calcul (20) du dispositif, unité (20) au moyen de laquelle on peut déterminer la vitesse du son ($c_o$) qui a été réduite à une certaine température de référence préétablie ($T_o$) au moyen d'une formule de calcul connue (3) et en ce que le dispositif comprend une unité (23) qui est apte à émettre une alarme ou un signal de commande lorsque la vitesse du son réduite ($c_o$) diffère de la plage des valeurs escomptées ($c_1$....$c_2$).

10. Dispositif selon la revendication 8 ou 9, caractérisé en ce que le dispositif comprend un corrélateur de polarité ($15$ ; $15_1$, $15_2$) dans lequel sont amenés les signaux reçus en provenance des microphones (14a, 14b), en ce que le dispositif comprend deux filtres balayés en fréquence (17a, 17b) ou un système de filtres équivalent, à travers lequel sont amenés les signaux provenant des microphones (14a, 14b) vers le corrélateur de polarité (15), et en ce que le dispositif comprend une commande (11) de balayage de fréquence, au moyen de laquelle on peut commander de façon synchrone entre elles la fréquence du générateur de signaux de balayage en fréquence (12) et la fréquence balayant les filtres (17) à bande étroite.

11. Dispositif selon l'une quelconque des revendications 8 à 10, caractérisé en ce qu'un détecteur de pression (21) pour le gaz en écoulement est placé dans la conduite de mesure, lequel détecteur donne un signal de mesure de pression à l'unité de calculateur (20) du dispositif.

12. Dispositif selon l'une quelconque des revendications 8 à 11, pour contrôler le gaz naturel, caractérisé en ce que le dispositif est apte à émettre une impulsion de démarrage pour une détermination chromatographique plus précise de la composition du gaz naturel.